Europäisches Patentamt

European Patent Office

Office européen des brevets

(11) Veröffentlichungsnummer: **0 098 602**
**A2**

(12) # EUROPÄISCHE PATENTANMELDUNG

(21) Anmeldenummer: 83106627.9

(22) Anmeldetag: 06.07.83

(51) Int. Cl.³: **A 61 C 13/14**, A 61 C 19/00

(30) Priorität: 08.07.82 DE 3225589

(43) Veröffentlichungstag der Anmeldung: 18.01.84
Patentblatt 84/3

(84) Benannte Vertragsstaaten: **AT BE CH DE FR GB IT LI LU NL SE**

(71) Anmelder: **Espe Fabrik pharmazeutischer Präparate GmbH, D-8031 Seefeld / Obb (DE)**

(72) Erfinder: **Herold, Wolf-Dietrich, Dr., Seestrasse 16, D-8031 Hechendorf (DE)**
Erfinder: **Grafwallner, Karl L., Kathi-Kobus-Strasse 9, D-8000 München 40 (DE)**
Erfinder: **Keller, Michael, Riessheimer Strasse 7, D-8032 Lochham (DE)**

(74) Vertreter: **Strehl, Peter et al, Strehl, Schübel-Hopf, Schulz Patentanwälte**
**Widenmayerstrasse 17 Postfach 22 03 45, D-8000 München 22 (DE)**

(54) Gerät zum Behandeln von Zahnersatzteilen und dentalen Werkstoffen mit Strahlung.

(57) Ein Gerät zum Behandeln von Zahnersatzteilen umfasst eine in einem stehenden Gehäuse 14 montierte Lampe 1, die über eine Filteranordnung 3 und einen Lichtleiter 9 Strahlung eines zur Photopolymerisation geeigneten ausgewählten Spektralbereiche emittiert. Wird das zu behandelnde Zahnersatzteil 20 an eine vorgegebene Stelle unterhalb der Strahlaustrittsöffnung 7 des Lichtleiters 9 gebracht, so wird ein mit Infrarot-Licht arbeitender Annäherungsschalter 4 aktiviert, der die Lampe 1 für eine vorbestimmte Mindestbrenndauer einschaltet. An der Vorderseite des Gehäuses 14 ist eine Schutzscheibe 12 schwenkbar angeordnet, die die ausgewählte Strahlung stark absorbiert und somit verhindert, dass diese intensive Strahlung in die Augen des Benutzers gelangt, andererseits aber für das übrige sichtbare Lichtspektrum im wesentlichen durchlässig ist und daher eine augenschonende Beobachtung des bestrahlten Zahnersatzteils 20 gestattet. Am Fuss 13 des Gehäuses 14 unterhalb des Behandlungsortes ist eine lichtabsorbierende Platte 11 angeordnet, die ebenfalls eine Reflexion der ausgewählten Strahlung in die Augen des Benutzers verhindert. Diese Platte 11 ist auswechselbar, da sie einer Verschmutzung durch heruntertropfendes Material ausgesetzt ist, das auf ihr aushärtet.

EP 0 098 602 A2

0098602

ESPE Fabrik pharmazeutischer
Präparate GmbH
EPA-13 779                                   6. Juli 1983


### Gerät zum Behandeln von Zahnersatzteilen und dentalen Werkstoffen mit Strahlung


Die Erfindung betrifft ein Gerät zum Behandeln von Zahnersatzteilen und dentalen Werkstoffen mit Strahlung eines ausgewählten Spektralbereiches, wie es im Oberbegriff des Patentanspruchs 1 näher bezeichnet ist.

Im dentaltechnischen Bereich werden z.B. zur Herstellung von Zahnersatzteilen, wie Kronen, einzelnen Zähnen, Brücken, Gebißteilen oder ganzen Gebissen, dentale Werkstoffe verwendet, die mittels eines Photoinitiatorsystems mit Licht polymerisierbar und aushärtbar sind.

Zum Einleiten der Polymerisation sind Belichtungsgeräte entwickelt worden, die als Lichtquellen Halogen-Quarz-Lampen einsetzen. Ein solches Belichtungsgerät ist beispielsweise in der DE-OS 2 901 534 beschrieben. Das dort beschriebene Gerät ist ein Handgerät mit einem pistolenartigen Griff, bei dem die Lichtquelle mit Hilfe eines Druckschalters ein- und ausgeschaltet wird.

Die praktische Anwendung dieses Geräts bei der Herstellung von Kronen und Brücken zeigt die nachfolgend beschriebenen Nachteile. Der Anwender, der ein Zahnersatzteil wie z.B. eine Krone herstellen soll, bringt beispielsweise auf ein Metallteil einen dünnen Überzug aus einem photopolymerisierbaren Material auf. Das Material wird dabei mit einem dünnen Pinsel aufgetragen und dann mit Hilfe des Bestrahlungsgerätes bestrahlt, so daß die Polymerisation einsetzt. Dieser Vorgang des Auftragens und des nachfolgenden Bestrahlens wird mehrmals wiederholt, bis die aufeinander aufgetragenen Schichten die gewünschte äußere Gestalt des Zahnersatzteiles angenommen haben. Für jeden Bestrahlungsvorgang muß der Anwender sein Werkzeug beiseite legen, das Bestrahlungsgerät ergreifen und die Belichtung durchführen. Dieser erzwungene Wechsel des Werkzeuges erweist sich als unpraktisch und verlängert die zur Durchführung der notwendigen Arbeiten erforderliche Zeit.

Auch mit den bekannten, stehenden Geräten, mit denen Zahnersatzteile behandelt und belichtet werden, z.B. dem Gerät gemäß der europäischen Patentanmeldung Veröffentlichungs-Nr. 37 461, läßt sich hier keine Verbesserung erzielen, weil die Zahnersatzteile bei derartigen Geräten in eine besondere Aufnahme eingelegt und das Gerät von Hand eingeschaltet werden muß.

Aufgabe der Erfindung ist daher die Angabe eines Gerätes, das es dem Zahntechniker erlaubt, eine Bestrahlung von Zahnersatzteilen und dentalen Werkstoffen insbesondere zum Einleiten der Polymerisation, durchzuführen, ohne daß er zwangsweise die für die Arbeiten an dem Zahnersatzteil notwendigen Werkzeuge beiseite legen muß.

Die Lösung dieser Aufgabe ist im Patentanspruch 1 angegeben. Bei einem danach gestalteten Gerät kann der Zahntechniker das Zahnersatzteil wie auch die zur Bearbeitung des Zahnersatzteiles notwendigen Werkzeuge in der Hand behalten; er führt das zu behandelnde Zahnersatzteil an die vorbestimmte Stelle unter der Strahlaustrittsöffnung des Geräts, so daß das Gerät automatisch die Strahlungsquelle einschaltet und die Bestrahlung des Zahnersatzteiles durchgeführt wird.

Vorteilhafte Weiterbildungen der Erfindung ergeben sich aus den Unteransprüchen.

0098602

Als Annäherungsschalter kommen verschiedene Möglichkeiten in Betracht. Einmal können Vorrichtungen verwendet werden, die Kapazitäts- und/oder Induktivitätsmeßbrücken aufweisen und die darauf ansprechen, daß bei Annäherung eines Gegenstandes ein elektrostatisches oder elektromagnetisches Feld, z.B. ein Hochfrequenzfeld, verändert wird. Gemäß einer bevorzugten Ausgestaltung der Erfindung besteht der Annäherungsschalter aus einer Infrarot-Lichtquelle und einem Infrarot-Detektor. Bei Annäherung eines Gegenstandes an den Annäherungsschalter wird dann infrarotes Licht in den Infrarot-Detektor reflektiert, so daß der Schalter anspricht.

Gemäß einer weiteren vorteilhaften Ausgestaltund der Erfindung ist der Annäherungsschalter mit einer Zeitgeberschaltung gekoppelt, die bei Ansteuerung die Strahlungsquelle für eine vorgegebene Mindestbrenndauer einschaltet. Bekanntlich stellt sich bei Halogen-Quarzlampen der Halogenkreislauf, durch den die Lebensdauer einer solchen Lampe verlängert wird, erst ab einer bestimmten Brenndauer ein. Würde die Bedienungsperson ein Zahnersatzteil nur kurzzeitig unter das Bestrahlungsgerät halten, so würde bei direkter Steuerung der Strahlungsquelle durch den Annäherungsschalter diese nur kurzzeitig, also kürzer als die vorgesehene Mindestbrenndauer, eingeschaltet und bei wiederholten Vorgängen dieser Art ihre Lebensdauer stark herabgesetzt. Um dies zu verhindern, ist der Annäherungsschalter mit einer Zeitgeberschaltung gekoppelt, so daß die Mindestbrenndauer stets eingehalten ist.

In weiterer Ausgestaltung ist vorgesehen, nach dem Einschalten der Netzspannung die Lampe mit einer Spannung unterhalb der Nennspannung vorzuheizen. Dadurch wird die Zahl der Brennzyklen entscheidend vergrößert und die Lebensdauer der Lampe verlängert.

- 4 -

0098602

Die Wellenlänge des ausgewählten Lichts liegt im UV- und sichtbaren Bereich, bevorzugt zwischen 400 und 500 nm, insbesondere bei etwa 460 nm.

Zum Erzielen einer gleichmäßigen Leuchtdichte über einen vorgesehenen Bestrahlungsquerschnitt ist ein Lichtleiter vorgesehen. Um eine ausreichende Intensität bei einer hinreichend großen Leuchtfläche zu erzielen, wird vorzugsweise das Strahlungsbündel auf einen Durchmesser von etwa 10 mm begrenzt.

Vorzugsweise sind die Strahlungsquelle und die Strahlaustrittsöffnung so angeordnet, daß das emittierte Strahlenbündel in abwärts geneigter Richtung verläuft. Damit weder von der Tischplatte, auf der das Gerät steht, noch von seinem eigenen Standfuß Strahlung reflektiert wird, das die Bedienungsperson in der Arbeit stören kann, ist eine den entsprechenden Spektralbereich absorbierende Platte unterhalb des vorgesehenen Behandlungsortes angeordnet. Diese Platte ist vorzugsweise auswechselbar, damit Dentalmasse, die bei den Arbeiten heruntertropft und im Laufe der Zeit durch die Strahlung aushärtet, problemlos entfernt werden kann.

Weiterhin ist in der Nähe der Strahlaustrittsöffnung eine Schutzscheibe vorgesehen, die den ausgewählten Spektralbereich absorbiert, aber das übrige sichtbare Licht im wesentlichen durchläßt, so daß die Bedienungsperson durch diese Schutzscheibe das zu bestrahlende Zahnersatzteil ohne Blendung beobachten kann.

Zum Zwecke der Erleichterung der Arbeiten mit diesem Gerät hat es eine Gestalt, bei der auf einem Fuß ein gegen die Vertikale geneigtes, kastenförmiges Gehäuse aufgesetzt ist. Der obere Teil des Gehäuses weist einen nach vorn stehenden Ansatz auf, in dem sich die Strahlungsquelle und der Strahlungsaustritt befinden. In dem geneigt stehenden Gehäuse sind beispielsweise die Stromversorgung und die Zeitgeberschaltung für die Betätigung der Strahlungsquelle untergebracht.

Im folgenden wird nun die Erfindung anhand des in den Zeichnungen dargestellten Ausführungsbeispiels beschrieben und näher erläutert. In den Zeichnungen zeigen:

Fig. 1 einen schematischen Schnitt durch das Bestrahlungsgerät;

Fig. 2 eine Seitenansicht mit einem Teilschnitt durch den Strahlenaustrittsteil des Geräts;

Fig. 3 die Halterung einer Schutzscheibe an dem Gerät;

Fig. 4 ein Blockschaltbild für eine Schaltung zum Betrieb der in dem Gerät enthaltenen Strahlungsquelle.

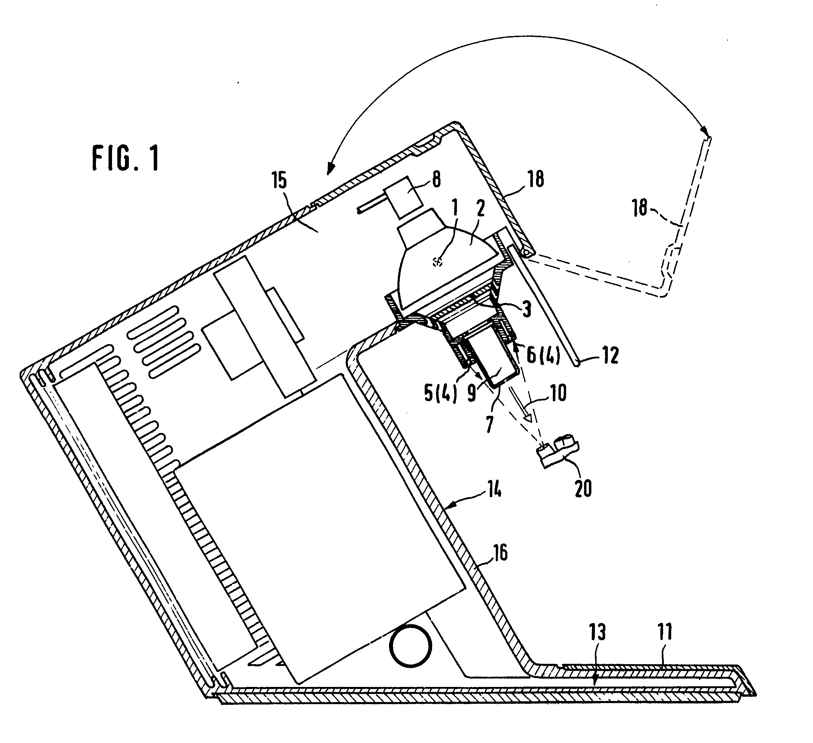

Gemäß Fig. 1 umfaßt das Gerät einen Fuß 13, auf den ein kastenförmiges gegen die Vertikale geneigtes Gehäuse 14 aufgesetzt ist. Im oberen Teil des Gehäuses 14 ist ein Ansatz 15 vorgesehen, in dem eine Lampe 1 mit einem Reflektor 2 in einem Sockel 8 untergebracht ist. Im Strahlengang des Reflektors 2 ist eine Filteranordnung 3 angebracht, die die Photopolymerisation bei dem Zahnersatzwerkstoff einleitenden den ausgewählten Spektrahlbereich nahezu unbehindert durchläßt, anderes Licht wie z.B. Infrarot-Strahlung aber absorbiert. Unter dem Filter ist ein Lichtleiter 9 angeordnet, der für eine Bündelung des austretenden Lichtes 10 sorgt. Die Strahlenaustrittsöffnung 7 des Lichtleiters 9 hat einen Durchmesser von etwa 10 mm.

Ein Annäherungsschalter 4 umfaßt eine Infrarot-Quelle 5, von der infrarotes Licht ausgeht. Bei Annäherung eines Zahnersatzteils 20 an das Bestrahlungsgerät wird von diesem das auftreffende infrarote Licht reflektiert, so daß es auf einen Sensor 6 fällt. Mit dem dadurch verursachten Ausgangssignal des Detektors 6 wird ein in Fig. 1 nicht dargestellter Schalter betätigt, der die Lampe 1 einschaltet.

Zum Schutz der Bedienungsperson ist eine Schutzscheibe 12 vorgesehen. Diese Schutzscheibe absorbiert Licht des ausgewählten Bereichs, ist aber für das übrige sichtbare Licht in gewissem Umfang durchlässig, damit das unter die Strahlaustrittsöffnung 7 gehaltene Zahnersatzteil 20 ohne Blendung beobachtet werden kann.

Lampe und Reflektor und Lichtaustritt sind derart ausgerichtet, daß das Licht 10 etwa parallel zu der Frontseite 16 des Gehäuses 14 austritt.

Der Ansatz 15, in dem sich die Lichtquelle befindet, kann mittels einer Klappe 18 geöffnet werden, so daß ein Auswechseln der Lampe 1 ermöglicht wird.

Unter der Strahlaustrittsöffnung 7 und insbesondere unterhalb des Ortes, an dem das Zahnersatzteil 20 in das abgestrahlte Licht gehalten wird, befindet sich eine lichtabsorbierende Platte 11, die verhindert, daß auftreffendes Licht in die Augen des Benutzers des Gerätes reflektiert wird. Die Platte 11 ist auswechselbar, damit sie bei einer Verschmutzung durch herabgetroptes Zahnersatzmaterial leicht ausgetauscht werden kann.

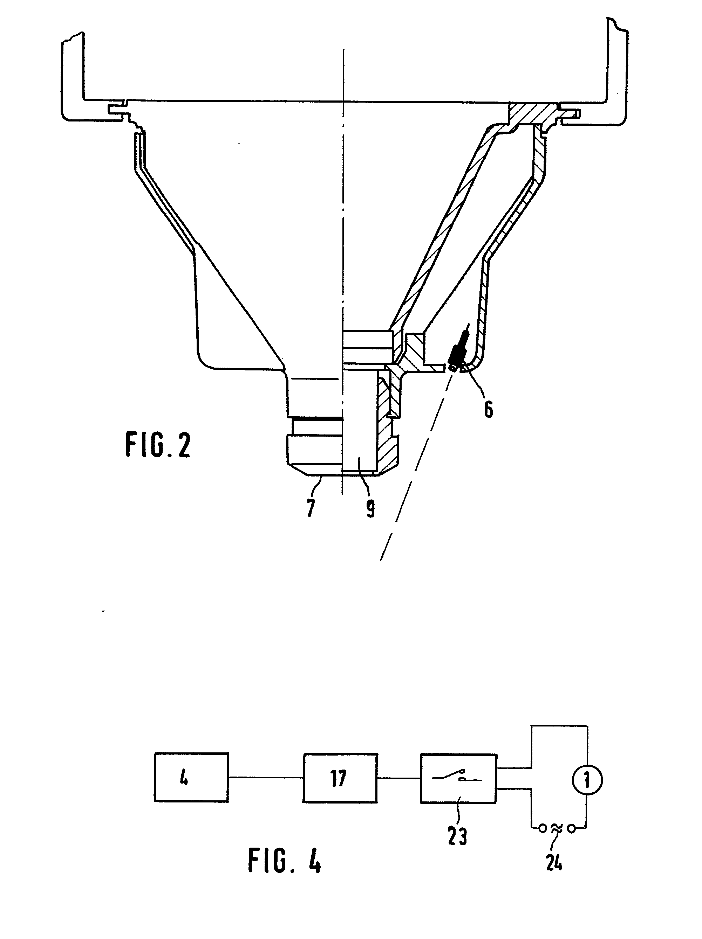

Fig. 2 zeigt im linken Teil eine Seitenansicht und im rechten Teil einen Schnitt durch den die Strahlaustrittsöffnung umfassenden Teil des Gerätes. In dem Gehäuse ist der Detektor 6 angeordnet, der einen Bestandteil des Annäherungsschalters 4 bildet. Er ist so ausgestaltet, daß er nur dann das von einem Zahnersatzteil reflektierte, von der Infrarot-Lichtquelle ausgehende Licht empfängt, wenn sich das Zahnersatzteil innerhalb einer bestimmten Mindestentfernung von der Strahlaustrittsöffnung 7 befindet.

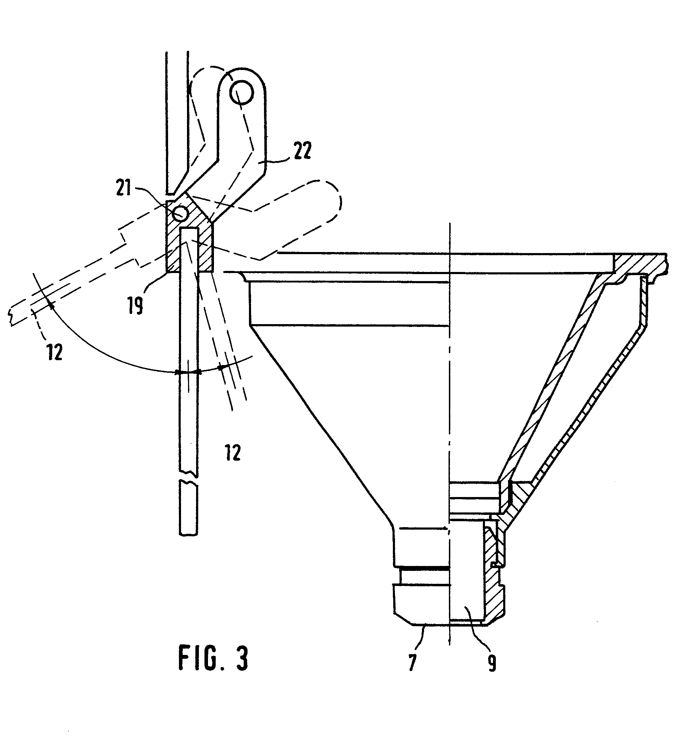

Anhand von Fig. 3 ist erkennbar, daß die Schutzscheibe 12 schwenkbar angeordnet ist. Die Schutzscheibe 12 ist in eine Gabel 19 gesteckt, die um eine Achse 21 schwenkbar ist. Eine kniehebelartig ausgebildete Rasteinrichtung 22 sorgt dafür, daß die Schutzscheibe 12 in verschiedenen Stellungen fixiert werden kann.

In Fig. 4 ist schematisch ein Blockschaltbild für eine Schaltung zum Betrieb der Lampe dargestellt. Mit 4 ist

0098602

der Annäherungsschalter bezeichnet. Er gibt dann, wenn ein Gegenstand an den vorgesehenen Behandlungsort gebracht wird ein Ausgangssignal an eine Zeitgeberschaltung 17 ab. Diese Zeitgeberschaltung 17 betätigt einen Ein-/Ausschalter 23, der die Lampe 1 an eine Spannungsversorgung 24 legt. Die Zeitgeberschaltung ist so beschaffen, daß sie unmittelbar nach dem Eintreffen des Ausgangssignales des Annäherungsschalters 4 ein Schaltsignal an den Schalter 23 abgibt, so daß dieser sofort die Lampe 1 einschaltet. Wird das zu behandelnde Zahnersatzteil entfernt, so fällt das Ausgangssignal des Annäherungsschalters 4 ab. Liegt dieser Abfall vor Ablauf einer bestimmten Mindestzeit, so bleibt das Ausgangssignal der Zeitgeberschaltung 17 auf seinem alten Wert und hält weiterhin den Schalter 23 im Ein-Zustand. Liegt dagegen der Abfall des Signals des Annäherungsschalters 4 außerhalb dieser Mindestzeit, so fällt auch das Ausgangssignal der Zeitgeberschaltung ab, und der Schalter 23 gelangt in die "Aus-Stellung". Hierdurch wird erreicht, daß stets eine bestimmte Mindestbrenndauer der Lichtquelle 1 gewährleistet wird.

PATENTANSPRÜCHE

1. Gerät zum Behandeln von Zahnersatzteilen und dentalen Werkstoffen mit Strahlung eines ausgewählten Spektralbereiches, mit

einer Strahlungsquelle (1), deren Strahlung den ausgewählten Spektralbereich enthält,

einem Reflektor (2), der Strahlung des ausgewählten Spektralbereichs auf einen Behandlungsort lenkt, und

einer zwischen der Strahlungsquelle (1) und dem Behandlungsort vorgesehenen Filteranordnung (3), die im wesentlichen den ausgewählten Spektralbereich transmittiert, g e k e n n z e i c h n e t durch einen Annäherungsschalter (4) zum Einschalten der Strahlungsquelle (1), der durch die Anwesenheit eines Gegenstandes am Behandlungsort betätigbar ist.

2. Gerät nach Anspruch 1, dadurch g e k e n n z e i c h - n e t , daß der Annäherungsschalter (4) eine Infrarot-Lichtquelle (5) und einen Infrarot-Detektor (6) oder eine Kapazitäts-Meßeinrichtung oder eine Induktivitäts-Meßeinrichtung aufweist.

3. Gerät nach Anspruch 1 oder 2, g e k e r n z e i c h - n e t durch eine Zeitgeberschaltung (17), die bei Anstzuerung durch den Annäherungsschalter (4) die Strahlungsquelle (1) für eine vorgegebene Mindestbrenndauer einschaltet.

4. Gerät nach Anspruch 3, dadurch g e k e n n z e i c h -
n e t , daß die Strahlungsquelle (1) im betriebsbereiten
Zustand des Gerätes vorgeheizt ist.

5. Gerät nach einem der Ansprüche 1 bis 4, g e k e n n -
z e i c h n e t durch einen Lichtleiter (9), der die
austretende Strahlung als Bündel in Richtung des Behandlungsortes leitet.

6. Gerät nach Anspruch 7, dadurch g e k e n n z e i c h -
n e t , daß das austretende Ausstrahlungsbündel auf einen
Bündeldurchmesser begrenzt ist, der kleiner als etwa 10 mm
ist.

7. Gerät nach einem der Ansprüche 1 bis 6, dadurch
g e k e n n z e i c h n e t , daß die emittierte Strahlung
in einer abwärts geneigten Richtung verläuft und daß in
dieser Richtung am Fuß (13) des Gerätes eine den ausgewählten Spektralbereich absorbierende Einrichtung (11) angeordnet ist.

8. Gerät nach Anspruch 7, dadurch g e k e n n z e i c h -
n e t , daß die absorbierende Einrichtung eine am Fuß (13)
auswechselbar angebrachte Platte (11) aufweist.

0098602

9. Gerät nach einem der Ansprüche 1 bis 8, g e k e n n - z e i c h n e t durch eine zwischen einer Strahlenaustrittsöffnung (7) des Geräts und den Augen der Bedienungsperson angeordnete Schutzeinrichtung (12), die für Strahlung des ausgewählten Spektralbereichs stark absorptiv, für das übrige sichtbare Licht im wesentlichen durchlässig ist.

10. Gerät nach Anspruch 9, dadurch g e k e n n z e i c h - n e t , daß die Schutzeinrichtung eine klappbar oder schwenkbar am Gerät angebrachte Schutzscheibe (12) umfaßt.

PS/CG

FIG. 1

FIG. 2

FIG. 4

0098602

FIG. 3